# EUROPÄISCHE PATENTANMELDUNG

(11) **EP 4 480 923 A1**
(43) Veröffentlichungstag der Anmeldung: **25.12.2024**
(21) Anmeldenummer: 24181286.6
(22) Anmeldetag: 11.06.2024
(51) Int. Cl.: C02F 1/00, C02F 1/42

(54) **FÜLLWASSER- FILTEREINHEIT UND VERFAHREN ZUM ZUFÜHREN VON WASSER IN EIN BIOLOGISCHES SCHWIMMBECKEN ODER EINEN BIOLOGISCHEN SCHWIMMTEICH**

(30) Priorität: 20.06.2023 AT 5010523 U
(71) Anmelder: Biotop P&P International GmbH, 3400 Weidling (AT)
(72) Erfinder: Schelker, Jakob, 1230 Wien (AT)
(74) Vertreter: Vinazzer, Edith

(57) **Zusammenfassung**

Füllwasser-Filtereinheit (1) zum Zuführen von Wasser aus der kommunalen Wasserversorgung in ein biologisches Schwimmbecken oder einen biologischen Schwimmteich mit folgenden Komponenten:
einem Behälter (2) mit einem Boden (2a) und einer den Boden (2a) umschließenden ein- oder mehrteiligen Behälterwand (3),
einer im Behälter (2) befindlichen Schicht eines Phosphationen bindenden Filtermaterials (7),
einer im oberen Behälterbereich durch die Behälterwand (3) hindurch ins Behälterinnere geführten Sammelleitung (8) zur Wasserzufuhr, welche am oder beim Boden (2a) des Behälters (2) endet,
und mit einem im oberen Behälterbereich durch die Behälterwand (3) vom Behälterinneren nach außen geführten Auslassrohr (14), welches mit dem Schwimmbecken oder Schwimmteich in Verbindung ist.

An die Sammelleitung (8) ist außerhalb des Behälters (2) ein senkrecht verlaufendes und belüftetes Freifallrohr (10) angeschlossen, welches eine Freifallstrecke für Wasser zur Verfügung stellt, welches aus der kommunalen Wasserversorgung kommend über eine ins Innere des Freifallrohres (10) geführte und hier endende Wasserleitung (11) zuführbar ist.

## Beschreibung

Die Erfindung betrifft eine Füllwasser-Filtereinheit zum Zuführen von Wasser aus der kommunalen Wasserversorgung in ein biologisches Schwimmbecken oder einen biologischen Schwimmteich mit folgenden Komponenten:
einem Behälter mit einem Boden und einer den Boden umschließenden ein- oder mehrteiligen Behälterwand,
einer im Behälter befindlichen Schicht eines Phosphationen bindenden Filtermaterials,
einer im oberen Behälterbereich durch die Behälterwand hindurch ins Behälterinnere geführten Sammelleitung zur Wasserzufuhr, welche am oder beim Boden des Behälters endet,
und mit einem im oberen Behälterbereich durch die Behälterwand vom Behälterinneren nach außen geführten Auslassrohr, welches mit dem Schwimmbecken oder Schwimmteich in Verbindung ist.

Die Erfindung betrifft ferner ein Verfahren zum Zuführen von Wasser aus der kommunalen Wasserversorgung in ein biologisches Schwimmbecken oder einen biologischen Schwimmteich.

Zum Schwimmen vorgesehene biologische Schwimmbecken oder biologische Schwimmteiche werden ohne den Einsatz von Chlor oder anderen Desinfektionsmitteln betrieben und bleiben das Jahr über befüllt. Ein erforderliches Nachfüllen mit Wasser erfolgt üblicherweise mit Wasser aus der kommunalen Wasserversorgung, also Trinkwasser. Bei biologischen Schwimmbecken oder biologischen Schwimmteichen ist es besonders wichtig, Wasser ein- bzw. nachzufüllen, welches Phosphationen bindendes Filtermaterial durchströmt hat, um im Wasser der Schwimmbecken bzw. Schwimmteiche das Wachstum von Algen durch Phosphorlimitierung weitgehend zu verhindern. Dabei ist es beim Nachfüllen von Wasser erforderlich, ein Rückfließen von Wasser in die Trinkwasser-Installation durch einen normgemäß ausgeführten Systemtrenner im Wasserzulauf zu verhindern.

Es ist daher Aufgabe der vorliegenden Erfindung, auf eine technisch besonders einfache und zweckmäßige Weise, insbesondere unter Verzicht auf eine elektrisch zu betreibende Pumpe, bei einer Füllwasser Filtereinheit der eingangs genannten Art einen Systemtrenner zu realisieren und ein zugehöriges Verfahren zum Zuführen von Wasser aus der kommunalen Wasserversorgung in ein biologisches Schwimmbecken oder einen biologischen Schwimmteich zur Verfügung zu stellen.

Was den Systemtrenner betrifft wird die die gestellte Aufgabe erfindungsgemäß dadurch gelöst, dass an die Sammelleitung außerhalb des Behälters ein senkrecht verlaufendes und belüftetes Freifallrohr angeschlossen ist, welches eine Freifallstrecke für Wasser zur Verfügung stellt, welches aus der kommunalen Wasserversorgung kommend über eine ins Innere des Freifallrohres geführte und hier endende Wasserleitung zuführbar ist.

Das erfindungsgemäße Verfahren ist durch folgende aufeinander folgende Schritte gekennzeichnet:
Einspeisen von Wasser aus der kommunalen Wasserversorgung in eine Wasserleitung
über die Wasserleitung Einleiten des Wassers in das Innere eines senkrecht verlaufenden Freifallrohres zum Durchfließen einer Freifallstrecke,
Weiterleiten des Wassers über eine mit dem Freifallrohr verbundene Sammelleitung in den Bodenbereich eines Behälters,
im Behälter Fließen des Wassers durch eine Schicht eines Phosphationen bindenden Filtermaterials,
im oberen Behälterbereich Ausleiten des Wassers zum Schwimmbecken oder Schwimmteich.

Durch die Erfindung wird eine Füllwasser- Filtereinheit auf technisch einfache Weise mit einem normgerecht ausgeführten und entsprechend positionierten Systemtrenner (gemäß EN1717, Typ AB, in der zum Anmeldezeitpunkt geltenden Fassung) aus einem an die Sammelleitung angeschlossenem Freifallrohr versehen bzw. verbunden, welches fest mit der Trinkwasserleitung verbunden ist bzw. verbindbar ist. Der Betrieb der Filtereinheit zum Nachfüllen erfolgt ausschließlich durch den vorhandenen Leitungswasserdruck, es ist keine zusätzliche Pumpe erforderlich. Darüber hinaus ist das Freifallrohr auch in größerer Entfernung vom Behälter installierbar, beispielsweise auch innerhalb eines Gebäudes, sodass ein frostsicherer Betrieb ganzjährig ohne weitere Maßnahmen ermöglicht ist, vor allem wenn auch die Sammelleitung zwischen dem Freifallrohr und der Filtereinheit frostsicher ausgeführt ist.

Bei einer bevorzugten Ausführung der Füllwasser-Filtereinheit ist in die Wasserleitung ein Durchflussbegrenzer eingebaut. Ein Durchflussbegrenzer gestattet es, die Wasserdurchflussmenge und damit auch die Filtergeschwindigkeit, abgestimmt auf das Filtermaterial im Behälter, einzustellen.

Bei einer weiteren bevorzugten Ausführung ist in der Wasserleitung, bevor das Wasser durch den Durchflussbegrenzer geleitet wird, ein Magnetventil eingebaut. Ist eine Nachfüllautomatik für das Schwimmbecken bzw. den Schwimmteich vorgesehen, gestattet es das Magnetventil, per Niveauschalter eine automatische Nachspeisung mit Wasser durchzuführen.

Bei einer weiteren vorteilhaften Ausführung der Füllwasser-Filtereinheit ist im oberen Behälterbereich ein zweites vom Behälterinneren nach außen geführtes Auslassrohr eingebaut ist Mittels des weiteren Auslassrohres ist der Betriebszustand "SPÜLEN" ermöglicht. Dazu wird das die Verbindung zum Schwimmbecken bzw. Schwimmteich herstellende Auslassrohr mit einem Deckel geschlossen, die Öffnung des zweiten Auslassrohres offengelassen, der Durchflussbegrenzer auf maximalen Durchfluss eingestellt und das Filtermaterial im Behälter mit einer erhöhten Geschwindigkeit von unten nach oben durchspült.

Dadurch werden Feinmaterialien und sonstige Ablagerungen aus dem Filtermaterial ausgeleitet.

Bei einer weiteren bevorzugten und vorteilhaften Ausführung weist jedes Auslassrohr im Behälterinneren einen Rohrbogen mit einem senkrecht nach oben ragenden offenen Endabschnitt auf, welcher auf einem Niveau innerhalb des Behälters endet, welches sich je nach Betriebszustand auf dem Wasserniveaus im Behälter oder oberhalb oder unterhalb des Wasserniveaus im Behälter befindet und jeweils mittels eines Deckels verschließbar ist. Es kann daher auf einfache Weise zwischen den Betriebszuständen "NACHSPEISEN" und "SPÜLEN" gewechselt werden.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Ansicht, teilweise im senkrechten Schnitt, durch eine Ausführungsvariante einer Füllwasser- Filtereinheit und
Fig. 2 eine Sicht auf die Füllwasser- Filtereinheit von oben.

In der nachfolgenden Beschreibung und den Ansprüchen beziehen sich Begriffe wie oben, unten, senkrecht, waagrecht und dergleichen auf einen aufrechtstehenden Behälter der Füllwasser- Filtereinheit.

Das zum Nachfüllen von biologischen Schwimmbecken oder Schwimmteichen verwendete Füllwasser soll weitgehend frei von Phosphationen sein, um Algenwachstum zu vermeiden. Zu diesem Zweck passiert das Füllwasser in einer Füllwasser- Filtereinheit 1 einen Phosphationen bindenden Filter 7 bevor es ins Becken oder in den Teich eingespeist wird.

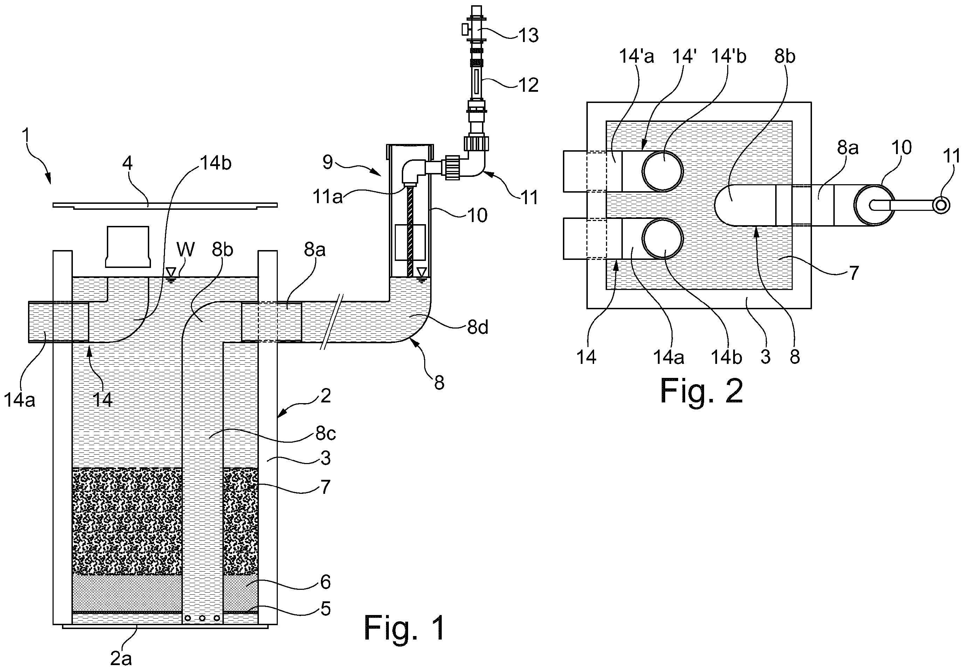

Die Figuren zeigen eine Füllwasser- Filtereinheit 1 mit einem beispielsweise quaderförmigen Behälter 2 aus Polypropylen mit einem Boden 2a und vier Behälterwänden 3. Der Behälter 2 ist mit einem Deckel 4, welcher in Fig. 1 angedeutet ist, von oben abdeckbar. Die Außenabmessungen an den Seiten des Bodens 2a betragen beispielsweise in der Größenordnung von 50 cm bis 70 cm, die Höhe der Behälterwände 2b beträgt beispielsweise 90 cm bis 110 cm.

Parallel zum Boden 2a ist in einer Höhe von insbesondere 2,00 cm bis 4,00 cm ein Lochblech 5 positioniert, auf welches eine Schicht Stützsand 6, insbesondere ein Quarzsand, beispielsweise in einer Füllhöhe von 10,00 cm bis 15,00 cm, aufgebracht ist. Auf den Stützsand 6 ist das Phosphationen bindende Filtermaterial 7 mit einer Füllhöhe von vorzugsweise 30,00 cm bis 40,00 cm aufgebracht. Das Filtermaterial 7 ist somit vorzugsweise ein Anionentauscher- Medium und beispielsweise das unter der als Unionsmarke geschützten Markenbezeichnung PHOSTEC bekannte Filtermaterial der Anmelderin.

Im oberen Bereich des Behälters 2 durchsetzt ein waagrecht verlaufender Rohrabschnitt 8a einer rohrförmigen Sammelleitung 8 eine der Behälterwände 2b. An den Rohrabschnitt 8a schließt im Inneren des Behälters 2 ein 90° Rohrbogen 8b an, von welchem ein senkrecht verlaufender Rohrabschnitt 8c ausgeht, der bis zum Boden 2a reicht und hier mit einer Anzahl von Durchtrittslöchern für Wasser versehen ist. Alternativ endet der Rohrabschnitt 8c knapp über dem Boden 2a. Über die Sammelleitung 8 zugeführtes Wasser durchfließt daher den Stützsand 6 und das Filtermaterial 7 von unten nach oben.

Außerhalb des Behälters 2 schließen an den Rohrabschnitt 8a weitere, nicht dargestellte Rohrabschnitte der Sammelleitung 8 an, wobei an den letzten Rohrabschnitt über einen weiteren 90° Rohrbogen 8d eine Systemtrenneinheit 9 anschließt. Die Systemtrenneinheit 9 weist ein normgemäß (EN1717, Typ AB) mit Durchbrechungen bzw. Öffnungen versehenes und daher belüftetes, senkrecht verlaufendes, an das Ende der Sammelleitung 8 angeschlossenes Freifallrohr 10 auf, in welchem eine senkrechte Freifallstrecke für zugeführtes Wasser zur Verfügung steht. Die Freifallstrecke weist eine Erstreckungslänge von mindestens 120 mm auf, es kann jedoch auch eine längere Freifallstrecke von beispielsweise 250 bis 300 mm zur Verfügung stehen. Das Freifallrohr 10 ist oben mit einem insbesondere abnehmbaren Deckel verschlossen. In das Innere des Freifallrohrs 10 ragt im oberen Bereich das eine Ende einer Wasserleitung 11 mit einem in die Richtung der Freifallstrecke weisenden Wasserauslass 11a. Das zweite Ende der Wasserleitung 11 ist an die kommunale Wasserversorgung angeschlossen bzw. anschließbar. In die Wasserleitung 11 ist ein Durchflussbegrenzer 12 eingebaut, um die Durchflussmenge und damit die Filtergeschwindigkeit, abgestimmt auf das Filtermaterial 7 im Behälter 2, einzustellen. Die Systemtrenneinheit 9 kann bis zu 15 m von der Filtereinheit 1 entfernt installiert werden, zum Beispiel in einem Keller, einem Gartenhaus oder dergleichen. Das Freifallrohr 10 endet am oder geringfügig ober-oder unterhalb des in Fig. 1 eingezeichneten Wasserniveaus W im Behälter 2 im Betriebszustand AUS, der weiter unten beschrieben ist.

Dem Durchflussbegrenzer 12 ist bei der gezeigten Ausführung ein Magnetventil 13 vorgeschaltet, welches, wenn eine Nachfüllautomatik für das Schwimmbecken bzw. den Schwimmteich vorgesehen ist, per Niveauschalter eine automatische Nachspeisung mit Wasser ermöglicht.

Die der Sammelleitung 8 gegenüber befindliche Behälterwand 2b ist auf gleicher Höhe wie der Rohrabschnitt 8a von waagrecht verlaufenden Rohrabschnitten 14a, 14'a zweier Auslassrohre 14, 14' durchsetzt. Jedes Auslassrohr 14, 14' weist im Behälterinneren ein 90° Rohrbogen 14b, 14'b auf, dessen offener Endabschnitt senkrecht nach oben ragt und auf einem Niveau innerhalb des Behälters 2 endet, welches sich, je nach Betriebszustand, am in Fig. 1 eingezeichneten Wasserniveau W oder etwas oberhalb oder unterhalb des Wasserniveaus W im Behälter 2 befindet.

Das eine Auslassrohr 14 steht außerhalb des Behälters 2 mit einem Wasserzulauf zum Schwimmbecken oder Schwimmteich in Verbindung, das zweite Auslassrohr 14' dient bei einem Spülvorgang zum Ableiten von Wasser, welches beispielsweise versickert oder in die Kanalisation geleitet wird.

Folgende Betriebszustände sind möglich:

### NACHSPEISEN eines Schwimmbeckens oder Schwimmteiches:

Das Auslassrohr 14' wird mittels eines Deckels geschlossen. Das durch die Wasserleitung 11 einströmende Wasser fällt nach dem Passieren des entsprechend eingestellten Durchflussbegrenzers 12 durch die Freifallstrecke im Freifallrohr 10, fließt anschließend durch die Sammelleitung 8 in den Quarzsand und von diesem durch das Filtermaterial 7. Der Strömungswiderstand des Filtermaterials 7 erhöht dabei den Wasserspiegel, sodass sich das Wasserniveau W im Behälter 2 um ca. 2,00 cm bis 3,00 cm oberhalb der Öffnung des Auslassrohres 14 befindet. Der hydraulische Gradient ist ausreichend, um eine gleichmäßige Durchströmung des Filtermaterials 7 sicherzustellen.

### Betriebszustand AUS:

Das Schwimmbecken oder der Schwimmteich werden nicht aufgefüllt bzw. nachgespeist. Der Wasserstand im Behälter 2 ist unterhalb der Öffnungen der Auslassrohre 14, 14', der Wasserstand im Sammelrohr 8 entspricht dem Wasserstand im Behälter 2, es ist kein hydraulischer Gradient vorhanden.

### Betriebszustand SPÜLEN:

Das Auslassrohr 14 wird mittels eines Deckels geschlossen, die Öffnung des zweiten Auslassrohres 14' bleibt offen. Der Durchflussbegrenzer 12 wird vorübergehend auf den maximalen Durchfluss eingestellt oder es wird eine externe Wasserzuführung, etwa über einen Gartenschlauch, dem Freifallrohr 10 von oben zugeführt. Dadurch erhöht sich im Behälter 2 der Wasserstand um bis zu 6,00 cm über das Niveau der Öffnung des Auslassrohres 14' und das Filtermaterial 7 wird durch eine erhöhte Spülgeschwindigkeit und den erhöhten hydraulischen Gradienten gut durchgespült, um etwaiges Feinmaterial und sonstige Ablagerungen auszuspülen.

### Bezugszeichenliste

- 1: Füllwasser- Filtereinheit
- 2: Behälter
- 2a: Boden
- 3: Behälterwand
- 4: Deckel
- 5: Lochblech
- 6: Stützsand
- 7: Filtermaterial
- 8: Sammelleitung
- 8a, 8c: Rohrabschnitt
- 8b, 8d: Rohrbogen
- 9: Systemtrenneinheit
- 10: Freifallrohr
- 11: Wasserleitung
- 11a: Wasserauslass
- 12: Durchflussbegrenzer
- 13: Magnetventil
- 14, 14': Auslassrohr
- 14a, 14'a: Rohrabschnitt
- 14b, 14'b: Rohrbogen
- W: Wasserniveau

## Patentansprüche

1. Füllwasser-Filtereinheit (1) zum Zuführen von Wasser aus der kommunalen Wasserversorgung in ein biologisches Schwimmbecken oder einen biologischen Schwimmteich mit folgenden Komponenten:
einem Behälter (2) mit einem Boden (2a) und einer den Boden (2a) umschließenden ein- oder mehrteiligen Behälterwand (3),
einer im Behälter (2) befindlichen Schicht eines Phosphationen bindenden Filtermaterials (7),
einer im oberen Behälterbereich durch die Behälterwand (3) hindurch ins Behälterinnere geführten Sammelleitung (8) zur Wasserzufuhr, welche am oder beim Boden (2a) des Behälters (2) endet,
und mit einem im oberen Behälterbereich durch die Behälterwand (3) vom Behälterinneren nach außen geführten Auslassrohr (14), welches mit dem Schwimmbecken oder Schwimmteich in Verbindung ist,
**dadurch gekennzeichnet,**
**dass** an die Sammelleitung (8) außerhalb des Behälters (2) ein senkrecht verlaufendes und belüftetes Freifallrohr (10) angeschlossen ist, welches eine Freifallstrecke für Wasser zur Verfügung stellt, welches aus der kommunalen Wasserversorgung kommend über eine ins Innere des Freifallrohres (10) geführte und hier endende Wasserleitung (11) zuführbar ist.

2. Füllwasser-Filtereinheit (1) nach Anspruch 1, **dadurch gekennzeichnet, dass** in die Wasserleitung (11) ein Durchflussbegrenzer (12) eingebaut ist.

3. Füllwasser-Filtereinheit (1) nach Anspruch 1 oder 2, **dadurch gekennzeichnet, dass** in die Wasserleitung (11), in Fließrichtung des Wassers betrachtet vor dem Durchflussbegrenzer (12), ein Magnetventil (13) eingebaut ist.

4. Füllwasser-Filtereinheit (1) nach einem der Ansprüche 1 bis 3, **dadurch gekennzeichnet, dass** im oberen Behälterbereich ein zweites vom Behälterinneren nach außen geführtes Auslassrohr (14`) eingebaut ist.

5. Füllwasser-Filtereinheit (1) nach einem der Ansprüche 1 bis 4, **dadurch gekennzeichnet, dass** jedes Auslassrohr (14, 14`) im Behälterinneren einen Rohrbogen (14b, 14'b) mit einem senkrecht nach oben ragenden offenen Endabschnitt aufweist, welcher auf einem Niveau innerhalb des Behälters (2) endet, welches sich je nach Betriebszustand auf dem oder oberhalb oder unterhalb des Wasserniveaus (W) im Behälter (2) befindet und mittels eines Deckels verschließbar ist.

6. Verfahren zum Zuführen von Wasser aus der kommunalen Wasserversorgung in ein biologisches Schwimmbecken oder einen biologischen Schwimmteich, mit folgenden aufeinander folgenden Schritten:
Einspeisen von Wasser aus der kommunalen Wasserversorgung in eine Wasserleitung (11),
über die Wasserleitung (11) Einleiten des Wassers in das Innere eines senkrecht verlaufenden Freifallrohres (10) zum Durchfließen einer Freifallstrecke,
Weiterleiten des Wassers über eine mit dem Freifallrohr (10) verbundene Sammelleitung (8) in den Bodenbereich eines Behälters (2),
im Behälter (2) Fließen des Wassers durch eine Schicht eines Phosphationen bindenden Filtermaterials (7),
im oberen Behälterbereich Ausleiten des Wassers durch ein Auslassrohr (14) zum Schwimmbecken oder Schwimmteich.

7. Verfahren nach Anspruch 6, **dadurch gekennzeichnet, dass** das Wasser vor dem Eintritt in das Freifallrohr (10) einen in die Wasserleitung (11) eingebauten Durchflussbegrenzer (12) durchfließt.

8. Verfahren nach Anspruch 7, **dadurch gekennzeichnet, dass** das Wasser vor dem Durchflussbegrenzer (12) ein Magnetventil (13) passiert.
